# EUROPEAN PATENT APPLICATION

(11) **EP 4 387 371 A1**
(43) Date of publication of application: **19.06.2024**
(21) Application number: 22869163.0
(22) Date of filing: 13.09.2022
(51) Int. Cl.: H04W 74/08

(54) **COMMUNICATION METHOD AND COMMUNICATION APPARATUS**

(30) Priority: 15.09.2021 CN 202111096200
(71) Applicant: Huawei Technologies Co., Ltd., Shenzhen, Guangdong 518129 (CN)
(72) Inventor: LIU, Peng, Shenzhen, Guangdong 518129 (CN); GUO, Ziyang, Shenzhen, Guangdong 518129 (CN); YANG, Xun, Shenzhen, Guangdong 518129 (CN); LUO, Jiajun, Shenzhen, Guangdong 518129 (CN); ZHENG, Bowen, Shenzhen, Guangdong 518129 (CN)
(74) Representative: Maiwald GmbH
(86) International application number: PCT/CN2022/118307
(87) International publication number: WO 2023/040794

(57) **Abstract**

Embodiments of this application disclose a communication method and apparatus. The method in embodiments of this application includes: determining, by a first device, a first channel access manner based on network status information, where the first channel access manner is a carrier sense multiple access with collision avoidance CSMA/CA channel access manner or an intelligent channel access manner, and the intelligent channel access manner is a manner of accessing a channel based on a channel access decision obtained by a neural network; and sending, by the first device, data on the channel in the first channel access manner. It may be learned that the first device selects the first channel access manner based on the network status information, and sends the data in the first channel access manner. Therefore, a communication collision between the first device and another node in a network is avoided, to implement interference avoidance, improve communication quality of the node, and improve user experience.

## Description

This application claims priority to Chinese Patent Application No. 202111096200.8, filed with the China National Intellectual Property Administration on September 15, 2021 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In a wireless network such as a short-distance transmission network system and a wireless fidelity (wireless fidelity, Wi-Fi) system, a channel is shared, that is, a plurality of nodes in the wireless network use a same shared channel to perform communication transmission. If two or more nodes simultaneously send packets, a communication collision occurs, resulting in a node transmission failure. Consequently, a throughput of the channel is affected, and a communication delay of the node is increased. This greatly affects user experience. Therefore, a channel access decision of the node plays an important role in communication.

Currently, in the Wi-Fi system, a carrier sense multiple access with collision avoidance (carrier sense multiple access with collision avoidance, CSMA/CA) mechanism is used to share a channel to avoid a communication collision. In the CSMA/CA mechanism, a node senses a channel for a period of time. If the channel is always idle in the period of time, the node accesses the channel.

In the foregoing technical solution, all nodes in the network need to use the CSMA/CA mechanism to contend for a channel. However, in an actual environment, there is still a heterogeneous system, a hidden terminal, and the like. The hidden terminal or a device in the heterogeneous system may use another channel contention mechanism, resulting in a communication collision with a node in the Wi-Fi system, affecting communication quality of the node, and resulting in poor user experience.

### SUMMARY

This application provides a communication method and a communication apparatus, so that a first device selects a first channel access manner based on network status information, and sends data in the first channel access manner. Therefore, a communication collision between the first device and another node in a network is avoided, to implement interference avoidance, improve communication quality of the node, and improve user experience.

According to a first aspect of this application, a communication method is provided. The method is performed by a first device, or the method is performed by some components (for example, a processor, a chip, or a chip system) in a first device. The method includes:

The first device determines a first channel access manner based on network status information, where the first channel access manner is a CSMA/CA channel access manner or an intelligent channel access manner, and the intelligent channel access manner is a manner of accessing a channel based on a channel access decision obtained by a neural network; and the first device sends data on the channel in the first channel access manner.

In the foregoing technical solution, the first device may select a channel access manner based on the network status information, and send the data in the selected channel access manner. The channel access manner may be the CSMA/CA channel access manner or the intelligent channel access manner. The intelligent channel access manner is a manner of accessing a channel based on the channel access decision obtained by the neural network. Therefore, a communication collision between the first device and another node in a network is avoided, to implement interference avoidance, improve communication quality of the node, and improve user experience.

In a possible implementation, the intelligent channel access manner is a manner of accessing a channel based on a channel access decision obtained by the neural network based on an environment status parameter.

It may be learned that the first device may select the intelligent channel access manner, and the intelligent channel access manner is a manner of accessing a channel based on the channel access decision obtained by the neural network based on the environment status parameter. Therefore, the first device may send the data based on the channel access decision output by the neural network. This helps avoid a communication collision between the first device and another node, to implement interference avoidance, and improve communication quality.

In another possible implementation, the environment status parameter includes at least one of the following:
a received signal strength indicator (received signal strength indicator, RSSI) obtained by the first device, an energy detection (energy detection, ED) value obtained by performing signal energy detection by the first device, and a carrier sense (carrier sense, CS) value obtained by performing carrier sense by the first device.

Some possible implementations of the environment status parameter are shown in this implementation, to facilitate execution of the solution. The neural network in the first device may output the channel access decision based on one or more of the environment status parameters shown above. The first device may send the data based on the channel access decision output by the neural network. This helps avoid a communication collision between the first device and another node, to implement interference avoidance, and improve communication quality.

In another possible implementation, the CSMA/CA channel access manner includes any one of the following: a distributed coordination function (distributed coordination function, DCF) channel access manner and an enhanced distributed channel access (enhanced distributed channel access, EDCA) manner. Some possible implementations of the CSMA/CA channel access manner are provided in this implementation, to facilitate implementation of the solution.

In another possible implementation, that the first device determines a first channel access manner based on network status information includes:

The first device determines a quantity M of times that an energy detection value is greater than a first threshold in a plurality of times of signal energy detection performed by the first device in first preset duration and a quantity N of times that a carrier sense value is greater than a second threshold in a plurality of times of carrier sense performed by the first device in the first preset duration, where both M and N are integers greater than or equal to 1; and if a ratio of M to N is greater than or equal to a third threshold, the first device determines that the first channel access manner is the CSMA/CA channel access manner; or if a ratio of M to N is less than a third threshold, the first device determines that the first channel access manner is the intelligent channel access manner.

A specific determining manner in which the first device determines the first channel access manner based on a network status parameter is provided above. The first device may select a corresponding channel access manner based on a network interference degree (represented by using the energy detection value and the carrier sense value). For example, when the network interference degree is high, the first device may select the intelligent channel access manner, to facilitate interference avoidance, so as to avoid a communication collision between the first device and another node, and improve communication transmission performance. When the network interference degree is low, the first device may select the CSMA/CA channel access manner.

In another possible implementation, that the first device determines a first channel access manner based on network status information includes:

If there is a hidden terminal in a basic service set (basic service set, BSS) in which the first device is located, the first device determines that the first channel access manner is the intelligent channel access manner; or if there is no hidden terminal in a BSS in which the first device is located, the first device determines that the first channel access manner is the CSMA/CA channel access manner.

Another specific determining manner in which the first device determines the first channel access manner based on a network status parameter is provided above. The first device may select a corresponding channel access manner based on a network topology structure. For example, when there is no hidden terminal in the BSS in which the first device is located, the first device selects the CSMA/CA channel access manner, to avoid a communication collision between the first device and the hidden terminal.

In another possible implementation, that the first device determines a first channel access manner based on network status information includes:

The first device determines total duration that is in second preset duration and in which a data packet is transmitted on the channel; and
if the total duration is greater than or equal to a fourth threshold, the first device determines that the first channel access manner is the intelligent channel access manner; or
if the total duration is less than a fourth threshold, the first device determines that the first channel access manner is the CSMA/CA channel access manner.

Another specific determining manner in which the first device determines the first channel access manner based on a network status parameter is provided above. The first device may select a corresponding channel access manner based on a busyness degree of the channel. For example, when the channel is busy, the first device selects the intelligent channel access manner, to avoid a communication collision with another node on the channel.

In another possible implementation, the first channel access manner is the intelligent channel access manner, and that the first device sends data on the channel in the first channel access manner includes: The first device maps the data to an intelligent channel access queue, where the intelligent channel access queue carries data that accesses a channel in the intelligent channel access manner; and the first device sends the data on the channel by using a queue parameter that is of the intelligent channel access queue and that is output by the neural network. It may be learned that a solution in which the first device sends the data on the channel in the intelligent channel access manner is provided. The first device may map the data to the intelligent channel access queue, and send the data on the channel by using the queue parameter that is of the intelligent channel access queue and that is output by the neural network, to avoid a communication collision with another node on the channel.

In another possible implementation, the queue parameter of the intelligent channel access queue includes a sending probability of the data or a first indication, and the first indication indicates whether to send the data. Two possible implementations of the queue parameter of the intelligent channel access queue are provided in this implementation, to facilitate execution of the solution. The first device may send the data on the channel by using the sending probability or the first indication output by the neural network, to avoid a communication collision with another node on the channel.

In another possible implementation, the method further includes:
The first device obtains an RSSI in the first preset duration; and the first device obtains the queue parameter of the intelligent channel access queue based on the RSSI in the first preset duration and the neural network.

In this implementation, the first device may obtain the queue parameter of the intelligent channel access queue based on the RSSI in the first preset duration and the neural network, so that the first device sends the data on the channel by using the queue parameter of the intelligent channel access queue.

In another possible implementation, the queue parameter of the intelligent channel access queue includes a sending probability of the data, and that the first device sends the data on the channel by using a queue parameter that is of the intelligent channel access queue and that is output by the neural network includes: The first device generates a random number corresponding to the data; the first device determines whether the random number is greater than the sending probability; and if the random number is greater than the sending probability, the first device does not send the data on the channel; or if the random number is not greater than the sending probability, the first device sends the data on the channel.

A process in which the first device may send the data on the channel by using the sending probability output by the neural network is shown in this implementation, to avoid a communication collision with another node on the channel.

In another possible implementation, the queue parameter of the intelligent channel access queue includes a first indication, and that the first device sends the data on the channel by using a queue parameter that is of the intelligent channel access queue and that is output by the neural network includes: If the first indication indicates to send the data, the first device sends the data on the channel; or if the first indication indicates not to send the data, the first device does not send the data on the channel.

A process in which the first device may send the data on the channel by using the first indication output by the neural network is shown in this implementation, to avoid a communication collision with another node on the channel.

In another possible implementation, the method further includes:
The first device receives a first frame from a second device, where the first frame includes an information element, the information element includes first information, and the first information includes a parameter of the neural network and a structure of the neural network, or the first information includes a gradient of the neural network and a structure of the neural network; and the first device determines the neural network based on the first information.

In this implementation, the first device may obtain the first information from the second device. The first device determines the neural network based on the first information, so that the first device outputs the queue parameter of the intelligent channel access queue through the neural network. Therefore, the first device may send the data in the intelligent channel access manner, to avoid a communication collision between the first device and another node.

In another possible implementation, the first frame is a beacon frame or a probe frame. Two possible carriers of the first information are shown in this implementation, to facilitate implementation of the solution.

According to a second aspect of this application, a communication method is provided. The method is performed by a second device, or the method is performed by some components (for example, a processor, a chip, or a chip system) in a second device. The method includes:

The second device determines first information, where the first information includes a parameter of a neural network and a structure of the neural network, or the first information includes a gradient of a neural network and a structure of the neural network, and the first information is used by a first device to determine the neural network; and the second device sends a first frame to the first device, where the first frame includes an information element, and the information element includes the first information.

In the foregoing technical solution, the second device may send the first information to the first device, so that the first device determines the neural network. In this way, the first device may output a queue parameter of an intelligent channel access queue through the neural network. Therefore, the first device may send data in an intelligent channel access manner, to avoid a communication collision between the first device and another node, so as to improve communication quality.

In a possible implementation, that the second device determines first information includes: The second device obtains RSSIs of a plurality of first devices and historical data transmission results of the plurality of first devices, where the plurality of first devices are first devices associated with the second device; and the second device trains the neural network based on the RSSIs of the plurality of first devices, the historical data transmission results of the plurality of first devices, and the structure of the neural network, to obtain the first information.

A process in which the second device obtains the first information is provided in this implementation, so that the solution is more comprehensive.

In another possible implementation, the first frame is a beacon frame or a probe frame. Two possible carriers of the first information are shown in this implementation, to facilitate implementation of the solution.

According to a third aspect of this application, a communication apparatus is provided, and includes a processing unit and a transceiver unit.

The processing unit is configured to determine a first channel access manner based on network status information. The first channel access manner is a CSMA/CA channel access manner or an intelligent channel access manner, and the intelligent channel access manner is a manner of accessing a channel based on a channel access decision obtained by a neural network.

The transceiver unit is configured to send data on the channel in the first channel access manner.

In a possible implementation, the intelligent channel access manner is a manner of accessing a channel based on a channel access decision obtained by the neural network based on an environment status parameter.

In another possible implementation, the environment status parameter includes at least one of the following: an RSSI obtained by a first device, an energy detection value obtained by performing signal energy detection by the first device, and a carrier sense value obtained by performing carrier sense by the first device.

In another possible implementation, the CSMA/CA channel access manner includes any one of the following: a DCF channel access manner and an EDCA manner.

In another possible implementation, the processing unit is specifically configured to:
determine a quantity M of times that an energy detection value is greater than a first threshold in a plurality of times of signal energy detection performed by the communication apparatus in first preset duration and a quantity N of times that a carrier sense value is greater than a second threshold in a plurality of times of carrier sense performed by the communication apparatus in the first preset duration, where both M and N are integers greater than or equal to 1; and
if a ratio of M to N is greater than or equal to a third threshold, determine that the first channel access manner is the CSMA/CA channel access manner; or
if a ratio of M to N is less than a third threshold, determine that the first channel access manner is the intelligent channel access manner.

In another possible implementation, the processing unit is specifically configured to:
if there is a hidden terminal in a BSS in which the communication apparatus is located, determine that the first channel access manner is the intelligent channel access manner; or
if there is no hidden terminal in a BSS in which the communication apparatus is located, determine that the first channel access manner is the CSMA/CA channel access manner.

In another possible implementation, the processing unit is specifically configured to:
determine total duration that is in second preset duration and in which a data packet is transmitted on the channel; and
if the total duration is greater than or equal to a fourth threshold, determine that the first channel access manner is the intelligent channel access manner; or
if the total duration is less than a fourth threshold, determine that the first channel access manner is the CSMA/CA channel access manner.

In another possible implementation, the first channel access manner is the intelligent channel access manner, and the transceiver unit is specifically configured to:
map the data to an intelligent channel access queue, where the intelligent channel access queue carries data that accesses a channel in the intelligent channel access manner; and
send the data on the channel by using a queue parameter that is of the intelligent channel access queue and that is output by the neural network.

In another possible implementation, the queue parameter of the intelligent channel access queue includes a sending probability of the data or a first indication, and the first indication indicates whether to send the data.

In another possible implementation, the processing unit is further configured to:
obtain an RSSI in the first preset duration; and
obtain the queue parameter of the intelligent channel access queue based on the RSSI in the first preset duration and the neural network.

In another possible implementation, the queue parameter of the intelligent channel access queue includes a sending probability of the data, and the transceiver unit is specifically configured to:
generate a random number corresponding to the data;
determine whether the random number is greater than the sending probability; and
if the random number is greater than the sending probability, not send the data on the channel; or
if the random number is not greater than the sending probability, send the data on the channel.

In another possible implementation, the queue parameter of the intelligent channel access queue includes a first indication, and the transceiver unit is specifically configured to:
if the first indication indicates to send the data, send the data on the channel; or
if the first indication indicates not to send the data, not send the data on the channel.

In another possible implementation, the transceiver unit is further configured to:
receive a first frame from a second device, where the first frame includes an information element, the information element includes first information, and the first information includes a parameter of the neural network and a structure of the neural network, or the first information includes a gradient of the neural network and a structure of the neural network; and
the processing unit is specifically configured to:
   determine the neural network based on the first information.

In another possible implementation, the first frame is a beacon frame or a probe frame.

According to a fourth aspect of this application, a communication apparatus is provided, and includes a processing unit and a transceiver unit.

The processing unit is configured to determine first information. The first information includes a parameter of a neural network and a structure of the neural network, or the first information includes a gradient of a neural network and a structure of the neural network, and the first information is used by a first device to determine the neural network.

The transceiver unit is configured to send a first frame to the first device. The first frame includes an information element, and the information element includes the first information.

In a possible implementation, the processing unit is specifically configured to:
obtain RSSIs of a plurality of first devices and historical data transmission results of the plurality of first devices, where the plurality of first devices are first devices associated with the communication apparatus; and
train the neural network based on the RSSIs of the plurality of first devices, the historical data transmission results of the plurality of first devices, and the structure of the neural network, to obtain the first information.

In another possible implementation, the first frame is a beacon frame or a probe frame.

According to a fifth aspect of embodiments of this application, a communication apparatus is provided, and includes at least one processor. The at least one processor is coupled to a memory.

The memory is configured to store a program or instructions.

The at least one processor is configured to execute the program or the instructions, to enable the apparatus to implement the method according to any one of the first aspect or the possible implementations of the first aspect, or to enable the apparatus to implement the method according to any one of the second aspect or the possible implementations of the second aspect.

According to a sixth aspect of embodiments of this application, a computer-readable storage medium that stores one or more computer-executable instructions is provided. When the computer-executable instructions are executed by a processor, the processor performs the method according to any one of the first aspect or the possible implementations of the first aspect, or the processor performs the method according to any one of the second aspect or the possible implementations of the second aspect.

According to a seventh aspect of embodiments of this application, a computer program product (or referred to as a computer program) that stores one or more computers is provided. When the computer program product is executed by a processor, the processor performs the method according to any one of the first aspect or the possible implementations of the first aspect, or the processor performs the method according to any one of the second aspect or the possible implementations of the second aspect.

According to an eighth aspect of embodiments of this application, a chip system is provided. The chip system includes at least one processor, configured to support a communication apparatus in implementing a function according to any one of the first aspect or the possible implementations of the first aspect, or configured to support a communication apparatus in implementing a function according to any one of the second aspect or the possible implementations of the second aspect.

In a possible design, the chip system may further include a memory, configured to store program instructions and data that are necessary for the communication apparatus. The chip system may include a chip, or may include a chip and another discrete device. Optionally, the chip system further includes an interface circuit, and the interface circuit provides program instructions and/or data for the at least one processor.

According to a ninth aspect of embodiments of this application, a communication system is provided. The communication system includes the communication apparatus according to the third aspect and the communication apparatus according to the fourth aspect.

For technical effects brought by any design manner of the third aspect to the ninth aspect, refer to the technical effects brought by different implementations of the first aspect and the second aspect. Details are not described herein.

It may be learned from the foregoing technical solutions that the technical solutions of this application have the following advantages:

It may be learned from the foregoing technical solutions that the first device determines the first channel access manner based on the network status information, where the first channel access manner is the carrier sense multiple access with collision avoidance CSMA/CA channel access manner or the intelligent channel access manner, and the intelligent channel access manner is a manner of accessing a channel based on the channel access decision obtained by the neural network; and the first device sends the data on the channel in the first channel access manner. It may be learned that the first device may select a channel access manner based on the network status information, and send the data in the selected channel access manner. The channel access manner may be the CSMA/CA channel access manner or the intelligent channel access manner. The intelligent channel access manner is a manner of accessing a channel based on the channel access decision obtained by the neural network. Therefore, a communication collision with another node in a network is avoided, to implement interference avoidance, improve communication quality of the node, and improve user experience.

### BRIEF DESCRIPTION OF DRAWINGS

FIG. 1A is a schematic diagram of a multi-link device according to an embodiment of this application;
FIG. 1B is a schematic diagram of a communication system according to an embodiment of this application;
FIG. 2 is a schematic diagram of an embodiment of a communication method according to an embodiment of this application;
FIG. 3A is a schematic diagram of a media access control (media access control, MAC) architecture of a first device according to an embodiment of this application;
FIG. 3B is another schematic diagram of a MAC architecture of a first device according to an embodiment of this application;
FIG. 4A is a schematic effect diagram of a communication method according to an embodiment of this application;
FIG. 4B is another schematic effect diagram of a communication method according to an embodiment of this application;
FIG. 5 is a schematic diagram of a structure of an information element according to an embodiment of this application;
FIG. 6 is a schematic diagram of another embodiment of a communication method according to an embodiment of this application;
FIG. 7 is a schematic diagram of another embodiment of a communication method according to an embodiment of this application;
FIG. 8 is a schematic diagram of another embodiment of a communication method according to an embodiment of this application;
FIG. 9 is a schematic diagram of a structure of a communication apparatus according to an embodiment of this application; and
FIG. 10 is another schematic diagram of a structure of a communication apparatus according to an embodiment of this application.

### DESCRIPTION OF EMBODIMENTS

Embodiments of this application provide a communication method and a communication apparatus, so that a first device selects a first channel access manner based on network status information, and sends data in the first channel access manner. Therefore, a communication collision between the first device and another node in a network is avoided, to implement interference avoidance, improve communication quality of the node, and improve user experience.

The technical solutions of this application may be applied to a wireless local area network (wireless local area network, WLAN), which is usually referred to as a wireless Wi-Fi network, and uses the institute of electrical and electronics engineers (Institute of Electrical and Electronics Engineers, IEEE) 802.11 series of standards. A network node that may be included in the WLAN is a station (station, STA), and the station includes an access point station (access point, AP) and a non-access point station (none access point station, Non-AP STA). In the following, the access point station is referred to as an AP, and the non-access point station is referred to as a STA. The technical solutions of this application are also applicable to an unlicensed frequency band in a cellular system, for example, long term evolution in unlicensed spectrum (long term evolution in unlicensed spectrum, LTE-U) and new radio in unlicensed spectrum (new radio in unlicensed spectrum, NR-U). The technical solutions of this application are described below by using a Wi-Fi network as an example.

The access point station is also referred to as a wireless access point, a hotspot, or the like. The AP is an access point for a mobile user to access a wired network, and is mainly deployed in a home, inside a building, and inside a campus, with a typical coverage radius of tens of meters to hundreds of meters. Certainly, the AP may alternatively be deployed outdoors. The AP is equivalent to a bridge that connects a wired network and a wireless network. A main function of the AP is to connect wireless network clients together, and then connect the wireless network to the Ethernet. Specifically, the AP may be a terminal device or a network device with a Wi-Fi chip. Optionally, the AP may be a device that supports an 802.11ax standard. Further, optionally, the AP may be a device that supports a plurality of WLAN standards such as 802.11be, 802.11ac, 802.11n, 802.11g, 802.11b, and 802. 11a, or may be an access point station suitable for a future generation of Wi-Fi standards.

The non-access point station (none access point station, Non-AP STA) may be a wireless communication chip, a wireless sensor, or a wireless communication terminal, for example, a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, and a computer supporting a Wi-Fi communication function. Specifically, the STA may be a terminal device or a network device with a wireless fidelity chip. Optionally, the station may support an 802.11ax standard. Further, optionally, the station supports a plurality of WLAN standards such as 802.11be, 802.11ac, 802.11n, 802.11g, 802.11b, and 802.11a, or may be a non-access point station suitable for a future generation of Wi-Fi standards.

The communication method and apparatus provided in embodiments of this application may be applied to a wireless communication system. The wireless communication system may be a WLAN. The method may be implemented by a communication device or a chip or a processor in a communication device in the wireless communication system. The communication device may be a wireless communication device that supports parallel transmission on a plurality of links, for example, is referred to as a multi-link device (Multi-link device) or a multi-band device (multi-band device). Compared with a device that supports only single-link transmission, the multi-link device has higher transmission efficiency and a higher throughput.

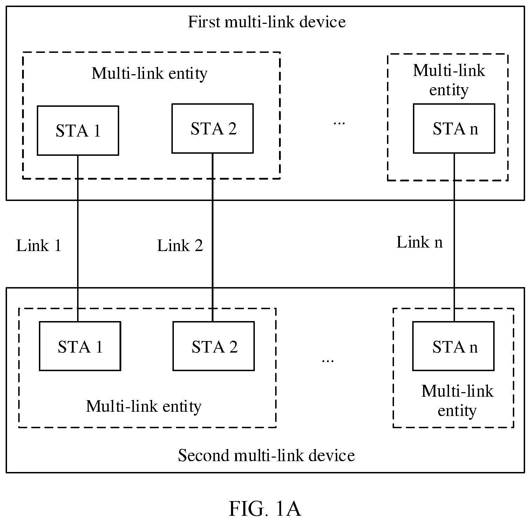

As shown in FIG. 1A, the communication system includes a multi-link device. The multi-link device includes one or more affiliated stations STAs (affiliated STAs). The affiliated STA is a logical station and may work on one link. The affiliated station may be an AP or a non-AP STA. For ease of description, in this application, a multi-link device whose affiliated station is an AP may be referred to as a multi-link AP, a multi-link AP device, or an AP multi-link device (AP multi-link device), and a multi-link device whose affiliated station is a non-AP STA may be referred to as a multi-link STA, a multi-link STA device, or a STA multi-link device (STA multi-link device). For ease of description, "the multi-link device includes an affiliated STA" may also be briefly described as "the multi-link device includes a STA".

The communication system to which the technical solutions of this application are applied includes a first device. The first device may be an AP or a STA. Optionally, the communication device further includes a second device. For example, the second device is an AP, and the first device is a STA.

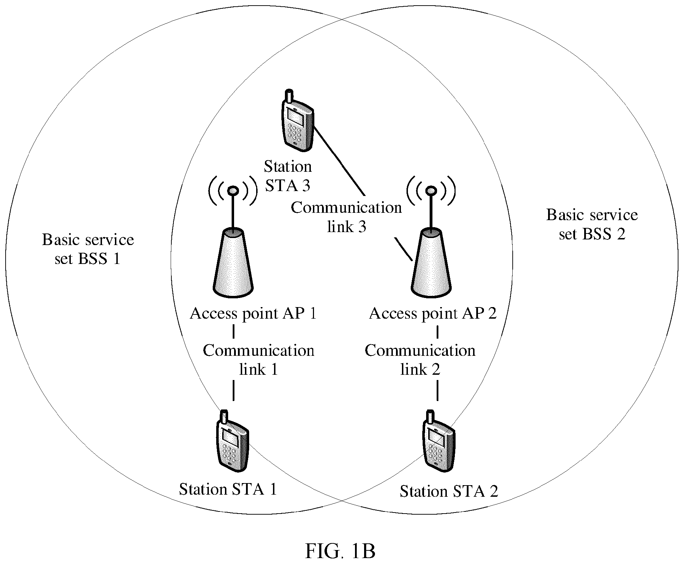

FIG. 1B is a schematic diagram of a communication system according to an embodiment of this application. With reference to FIG. 1B, the communication system includes an AP and a STA. As shown in FIG. 1B, a communication link 1 is established between an AP 1 and a STA 1, and the AP 1 may provide a communication service for the STA 1. An AP 2 respectively establishes a communication link 2 and a communication link 3 with a STA 2 and a STA 3, and the AP 2 may provide a communication service for the STA 2 and the STA 3. For example, the communication link 1 and the communication link 2 share a channel 1, and the STA 1 and the STA 2 may access a channel by using the communication method provided in this application, to send data. Alternatively, for example, the communication link 1 and the communication link 3 share a channel 2, and the AP 1 and the STA 3 may access a channel by using the communication method provided in this application, to send data.

The technical solutions of this application are described below with reference to specific embodiments.

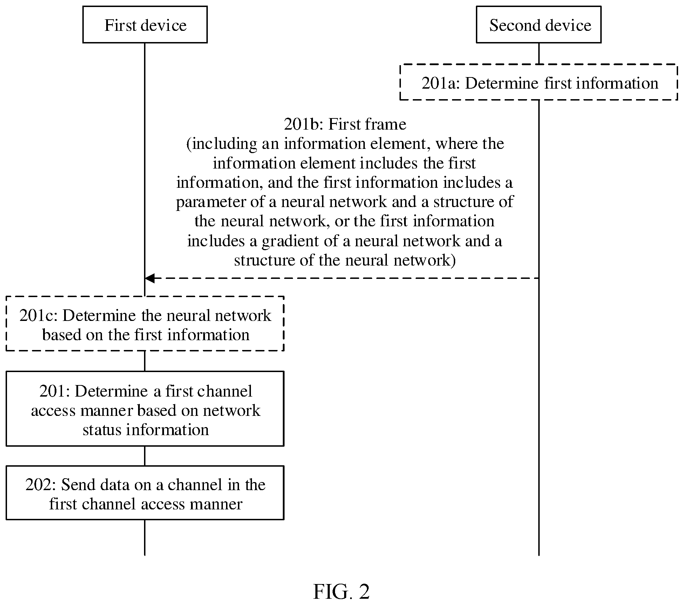

FIG. 2 is a schematic diagram of another embodiment of a communication method according to an embodiment of this application. With reference to FIG. 2, the communication method includes the following steps.

S201: A first device determines a first channel access manner based on network status information.

The first channel access manner is a CSMA/CA channel access manner or an intelligent channel access manner. The CSMA/CA channel access manner is a manner of accessing a channel by using a CSMA/CA mechanism. The intelligent channel access manner is a manner of accessing a channel based on a channel access decision obtained by a neural network.

Optionally, the CSMA/CA channel access manner includes at least one of the following: a DCF channel access manner and an EDCA manner.

Optionally, the intelligent channel access manner is a manner of accessing a channel based on a channel access decision obtained by the neural network based on an environment status parameter. In some implementations, the environment status parameter includes at least one of the following: a received signal strength indicator (received signal strength indicator, RSSI) obtained by detecting a signal by the first device, an energy detection (energy detection, ED) value obtained by performing signal energy detection by the first device, and a carrier sense (carrier sense, CS) value obtained by performing carrier sense by the first device.

In some implementations, the network status information includes at least one of the following: a network interference degree, a network topology structure, and a service busyness degree.

For example, the network interference degree may be represented by using the ED value and the CS value that are detected by the first device. The network topology structure may be used to determine whether there is a hidden terminal in a BSS in which the first device is located. The service busyness degree may be represented by using a busyness degree of a channel. For example, the service busyness degree may be represented by using duration in which a data packet is transmitted on the channel. The first device may select the first channel access manner based on the service busyness degree.

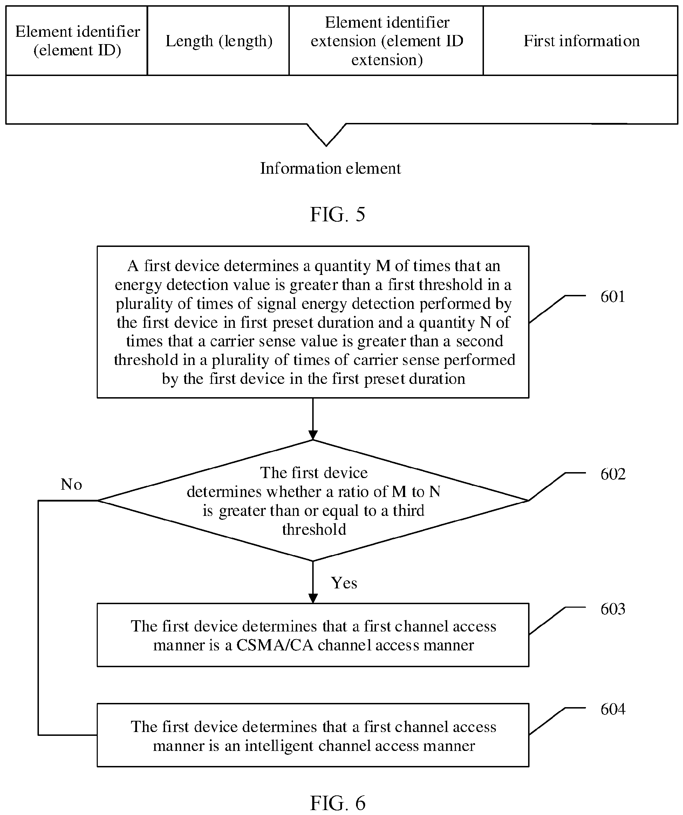

In step S201, the first device determines the first channel access manner based on the network status information in a plurality of manners. Several possible implementations are described below by using embodiments shown in FIG. 6, FIG. 7, and FIG. 8. For details, refer to the following related descriptions. Details are not described herein.

In this application, a MAC architecture of the first device includes an access manner mapping module. The access manner mapping module is used for channel access manner mapping of data and QoS mapping of the data.

Optionally, the MAC architecture includes a CSMA/CA queue and an intelligent channel access queue. The CSMA/CA queue carries data that accesses a channel in the CSMA/CA channel access manner. The intelligent channel access queue carries data that accesses a channel in the intelligent channel access manner. The MAC architecture further includes a queue parameter determining module and a virtual collision resolution module. The queue parameter determining module is configured to determine a queue parameter of the intelligent channel access queue. The virtual collision resolution module is configured to determine a final to-be-dequeued queue when data in a plurality of queues is to be simultaneously dequeued. Usually, the virtual collision resolution module may select data in a queue with a higher priority to be dequeued.

In some implementations, the queue parameter determining module includes an environment status parameter obtaining submodule and a neural network submodule. The environment status parameter obtaining submodule is configured to obtain the environment status parameter. The neural network submodule is configured to output the queue parameter of the intelligent channel access queue based on the environment status parameter.

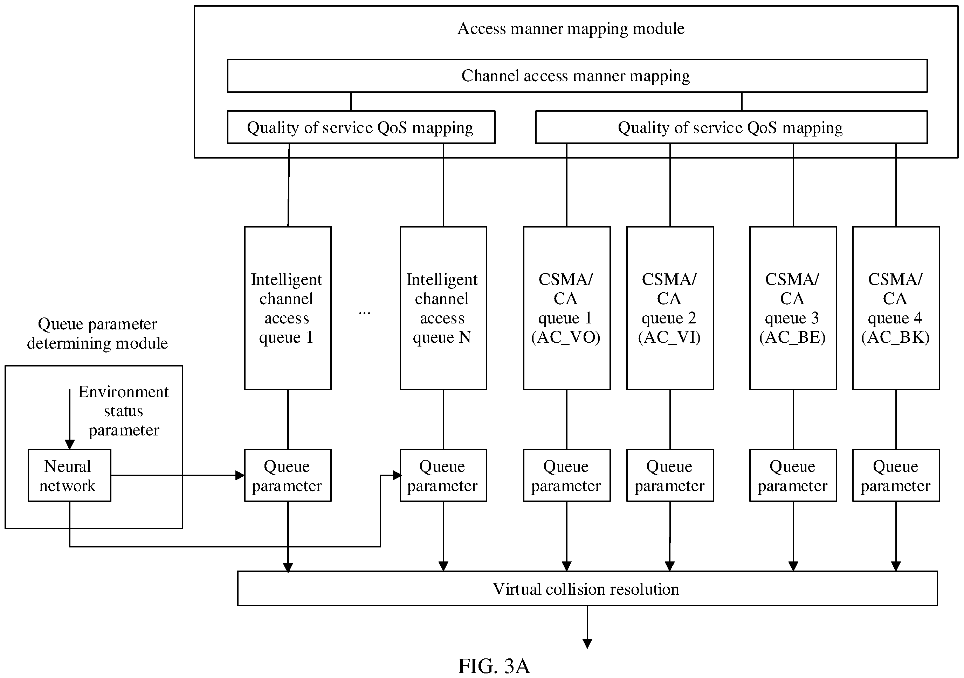

For example, as shown in FIG. 3A, the first device is a STA. A MAC architecture of the STA includes a CSMA/CA queue and an intelligent channel access queue. The STA determines, through an access manner mapping module, to map data to the CSMA/CA queue or to the intelligent channel access queue. For example, if the first channel access manner is the intelligent channel access manner, the STA maps the data to the intelligent channel access queue. Optionally, there are a plurality of intelligent channel access queues, and different intelligent channel access queues have different priorities. The STA may map the data to an intelligent channel access queue with a corresponding priority based on a QoS indication. For example, if the first channel access manner is the CSMA/CA channel access manner, the STA maps the data to the CSMA/CA queue. Optionally, there are a plurality of CSMA/CA queues, and different CSMA/CA queues have different priorities. The STA may map the data to a CSMA/CA queue with a corresponding priority based on a QoS indication. When data in a plurality of queues is to be simultaneously dequeued, the virtual collision resolution module determines that only one queue is finally to be dequeued. Usually, the virtual collision resolution module may select a queue with a higher priority.

S202: The first device sends data on the channel in the first channel access manner.

The first channel access manner is the CSMA/CA channel access manner or the intelligent channel access manner.

In a possible implementation, the first channel access manner is the CSMA/CA channel access manner, and the first device sends the data on the channel in the CSMA/CA channel access manner.

Specifically, the first device maps the data to the CSMA/CA queue, and sends the data on the channel by using a queue parameter of the CSMA/CA queue.

For example, as shown in FIG. 3A, the STA maps the data to a CSMA/CA queue 1 through the access manner mapping module in the MAC architecture. A priority of the CSMA/CA queue 1 (AC_VO) is higher than a priority of a CSMA/CA queue 2 (AC_VI), the priority of the CSMA/CA queue 2 (AC_VI) is higher than a priority of a CSMA/CA queue 3 (AC_BE), and the priority of the CSMA/CA queue 3 (AC_BE) is higher than a priority of a CSMA/CA queue 4 (AC_BK). The queue parameter of the CSMA/CA queue may include a minimum contention window (minimum contention window, CWmin), a maximum contention window (maximum contention window, CWmax), an arbitration inter-frame space (arbitration inter-frame space, AIFSN), and a maximum transmit opportunity (maximum transmit opportunity, Max TXOP). The STA sends the data on the channel by using a queue parameter of the CSMA/CA queue 1.

In another possible implementation, the first channel access manner is the intelligent channel access manner, and the first device sends the data on the channel in the intelligent channel access manner. There are a plurality of manners in which the first device sends the data on the channel in the intelligent channel access manner. Two possible implementations are described below.

Implementation 1: The MAC architecture of the first device includes the intelligent channel access queue and the queue parameter determining module. The intelligent channel access queue carries data that accesses a channel in the intelligent channel access manner. The queue parameter determining module is configured to determine a queue parameter of the intelligent channel access queue. The first device maps the data to the intelligent channel access queue, and sends the data on the channel by using the queue parameter of the intelligent channel access queue.

Step S202 is described below based on the implementation 1. Optionally, step S202 specifically includes step S202a and step S202b. The implementation 1 is described below with reference to step S202a and step S202b.

S202a: The first device maps the data to the intelligent channel access queue.

The intelligent channel access queue carries data that accesses a channel in the intelligent channel access manner.

For example, as shown in FIG. 3A, the first device determines that the first channel access manner is the intelligent channel access manner, and the first device may map the data to an intelligent channel access queue 1 based on a QoS indication of the data.

S202b: The first device sends the data on the channel by using the queue parameter that is of the intelligent channel access queue and that is output by the neural network.

For example, a structure of the neural network may be a residual neural network (residual neural network, ResNet) structure.

Optionally, the queue parameter of the intelligent channel access queue includes a sending probability p of the data or a first indication. The first indication indicates whether to send the data. The sending probability p is greater than or equal to 0 and less than or equal to 1.

Step S202b is described below with reference to specific content of the queue parameter of the intelligent channel access queue.

In a possible implementation, the queue parameter of the intelligent channel access queue includes the sending probability of the data. Step S202b specifically includes step S2001 to step S2004.

S2001: The first device generates a random number corresponding to the data.

S2002: The first device determines whether the random number is greater than the sending probability. If the random number is greater than the sending probability, step S2003 is performed. If the random number is not greater than the sending probability, step S2004 is performed.

S2003: The first device does not send the data on the channel.

S2004: The first device sends the data on the channel.

In another possible implementation, the queue parameter of the intelligent channel access queue includes the first indication. Step S202b specifically includes: If the first indication indicates to send the data, the first device sends the data on the channel; or if the first indication indicates not to send the data, the first device does not send the data on the channel.

For example, if the first indication is "0", it indicates that the first device does not send the data on the channel; and if the first indication is "1", it indicates that the first device sends the data on the channel.

It should be noted that in step S202a and step S202b, optionally, the first device keeps a backoff value of the CSMA/CA queue in the first device unchanged, or resets a backoff value of the CSMA/CA queue.

In step S202b, the first device obtains the queue parameter of the intelligent channel access queue through the neural network. With reference to step a and step b, a possible implementation in which the first device obtains the queue parameter of the intelligent channel access queue through the neural network is described below.

Step a: The first device obtains a received signal strength indicator RSSI in first preset duration.

For example, the first device may perform signal detection in the first preset duration, to obtain the RSSI in the first preset duration. Optionally, the first device may perform signal energy detection in the first preset duration, to obtain an energy detection value, and perform carrier sense in the first preset duration, to obtain a carrier sense value. The RSSI in the first preset duration may be a ratio of the energy detection value to the carrier sense value. The RSSI in the first preset duration may be understood as an environment status parameter obtained by the queue parameter determining module.

Step b: The first device obtains the queue parameter of the intelligent channel access queue based on the RSSI in the first preset duration and the neural network.

For example, the first device performs normalization processing on the RSSI in the first preset duration. Then, the first device inputs an RSSI obtained after normalization processing to the neural network, to obtain the queue parameter that is of the intelligent channel access queue and that is output by the neural network, for example, the sending probability of the data or the first indication.

For example, the first device performs sampling at a sampling interval of 9 µs (microseconds) to obtain the RSSI in the first preset duration. The RSSI in the first preset duration includes 360 RSSIs. A value range of the 360 RSSIs is [-100, -40]. The first device normalizes the value range [-100, -40] of the RSSI to an interval of [-1, 1], and the first device inputs the RSSI obtained after normalization processing to the neural network, to obtain the queue parameter that is of the intelligent channel access queue and that is output by the neural network.

It should be noted that optionally, the first device may regularly update the RSSI input to the neural network; the first device may periodically update the RSSI input to the neural network; or each time data is sent, the first device updates the RSSI input to the neural network.

For the manner in which each time data is sent, the first device updates the RSSI input to the neural network: In step S201b, if the first device does not send the data on the channel, the first device may replace the RSSI obtained in the first preset duration with an RSSI obtained by the first device at a current moment, and use the RSSI as an input parameter of the neural network, so that the neural network outputs a sending probability or a sending indication of next to-be-sent data. In step S201b, if the first device sends the data on the channel, the first device cannot obtain the RSSI in a data transmission process. Therefore, after sending of the data ends, the first device may update the RSSI input to the neural network. For example, if the first device successfully transmits the data on the channel, the first device may use X small RSSI values as input parameters of the neural network, for example, 120 random numbers in an interval of [-0.8, -0.5]; or if the first device fails to transmit the data on the channel, the first device may use X large RSSI values as input parameters of the neural network, for example, 120 random numbers in an interval of [0.5, 0.8], where X is a length of the data.

For example, as shown in FIG. 1B, a STA 1 and a STA2 share a channel 1. The STA 1 uses an intelligent channel access manner, and the STA2 uses a CSMA/CA channel access manner. The STA 1 accesses the channel 1 by using a process shown in step S202a and step S202b. The STA 1 may send data on the channel by using a queue parameter that is of an intelligent channel access queue and that is output by a neural network, to reduce a probability that a communication collision occurs between the STA 1 and the STA 2 on the channel 1. For example, the neural network in the STA 1 may determine, by using an RSSI in a period of time, a rule of sending data by the STA2 in the period of time. For example, if the STA2 sends data every 1 second, the STA 1 may avoid a time in which the STA 2 sends data on the channel 1. In this way, a communication collision between the STA 1 and the STA 2 is avoided, and communication performance is improved.

Implementation 2: The first device reuses the CSMA/CA queue, and the first device maps the data in the intelligent channel access manner to the CSMA/CA queue, and sends the data on the channel by using the queue parameter output by the queue parameter determining module.

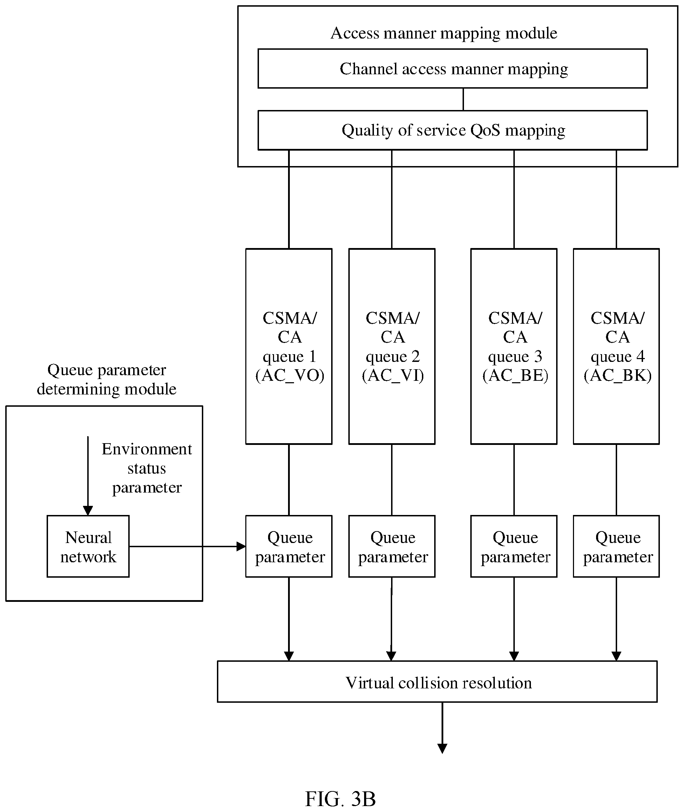

For example, as shown in FIG. 3B, the first device is a STA, and a MAC architecture of the STA includes an access manner mapping module, a CSMA/CA queue, a queue parameter determining module, and a virtual collision resolution module. The access manner mapping module is used for channel access manner mapping of data and QoS mapping of the data. The CSMA/CA queue may carry data that accesses a channel in the CSMA/CA channel access manner and data that accesses a channel in the intelligent channel access manner. That is, the STA reuses the CSMA/CA queue. The queue parameter determining module is configured to determine a queue parameter of the data that accesses a channel in the intelligent channel access manner. Optionally, the queue parameter determining module includes an environment status parameter submodule and a neural network submodule. The environment status parameter submodule is configured to obtain the environment status parameter. The neural network submodule is configured to determine the queue parameter of the intelligent channel access queue based on the environment status parameter. That is, for the data that is in the CSMA/CA queue and that accesses a channel in the intelligent channel access manner, the queue parameter used for the data may be determined by the neural network. The STA maps the data in the intelligent channel access manner to the CSMA/CA queue, and sends the data on the channel by using the queue parameter output by the neural network. The virtual collision resolution module is configured to determine a final to-be-dequeued queue when data in a plurality of queues is to be simultaneously dequeued. Usually, the virtual collision resolution module may select data in a queue with a higher priority to be dequeued.

Step S202 is described below based on the implementation 2. Optionally, step S202 specifically includes step S202c and step S202d.

S202c: The first device maps the data to a first CSMA/CA queue.

For example, as shown in FIG. 3B, the first device determines, through the access manner mapping module, to send the data in the intelligent channel access manner. The first device maps the data to a CSMA/CA queue 1. A queue parameter of the CSMA/CA queue 1 may include a minimum contention window, a maximum contention window, an arbitration inter-frame space, and a maximum transmit opportunity. Optionally, the first device may set minimum contention windows of all CSMA/CA queues in the MAC architecture to 0.

S202d: The first device sends the data on the channel by using a queue parameter output by the neural network.

Specifically, the queue parameter output by the neural network may include the minimum contention window, the maximum contention window, the arbitration inter-frame space, and the maximum transmit opportunity. For example, when the neural network may determine, by using the RSSI of the first device in the first preset duration, that the sending probability of the data is low, the neural network may set the minimum contention window to a large value, to control the first device not to send the data. When the neural network determines, by using the RSSI of the first device in the first preset duration, that the sending probability of the data is high, the neural network may set the minimum contention window to 0, so that the first device can send the data on the channel. That is, the queue parameter output by the neural network is the queue parameter used for the CSMA/CA queue, to adapt to the queue parameter used for the CSMA/CA queue in the MAC architecture, so that the first device reuses the CSMA/CA queue to transmit the data sent in the intelligent channel access manner.

It should be noted that in step S202c and step S202d, in the MAC architecture of the first device, a backoff value of a CSMA/CA queue other than the first CSMA/CA queue is kept unchanged.

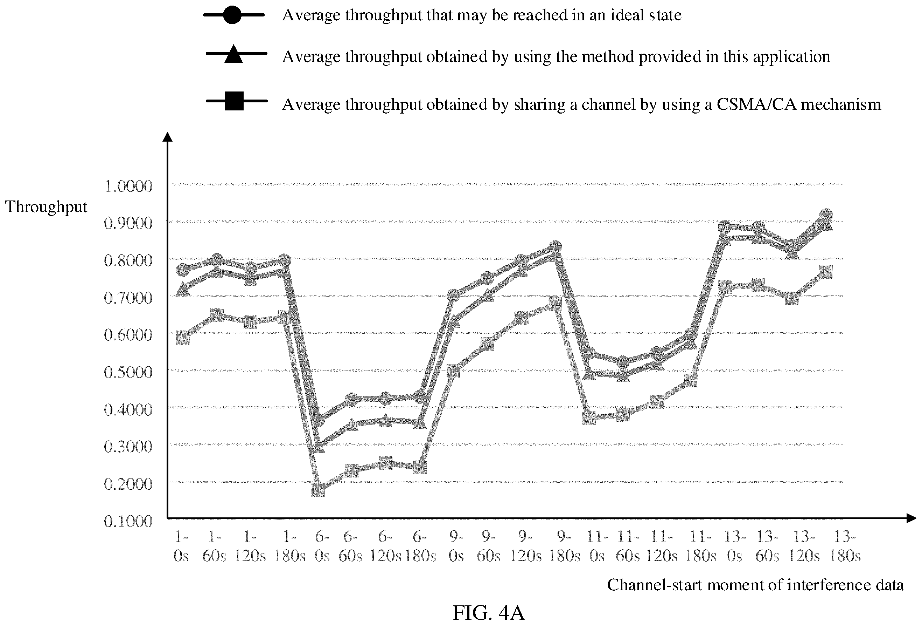

For the first device, according to the communication method provided in this application, communication quality of the first device may be improved, and a communication collision between nodes may be avoided. For example, FIG. 4A is a schematic effect diagram of a communication method according to an embodiment of this application. As shown in FIG. 4A, a horizontal coordinate represents a channel-a start moment of interference data. For example, a horizontal coordinate of 9-180s represents interference data at a start moment of 180s on a channel 9. A vertical coordinate represents an average throughput. The average throughput is obtained by collecting statistics on data that is on a channel represented by using a corresponding horizontal coordinate and that is within 60s starting from a start moment represented by using the horizontal coordinate. FIG. 4A shows an optimal value that may be reached by the average throughput in an ideal state, an average throughput obtained by sharing a channel by using a CSMA/CA mechanism, and an average throughput obtained by using the communication method provided in this application. It may be learned that the average throughput obtained by using the communication method provided in this application is clearly greater than the average throughput obtained by sharing a channel based on the CSMA/CA mechanism. It may be learned that for the first device, according to the communication method in this application, a system throughput can be improved.

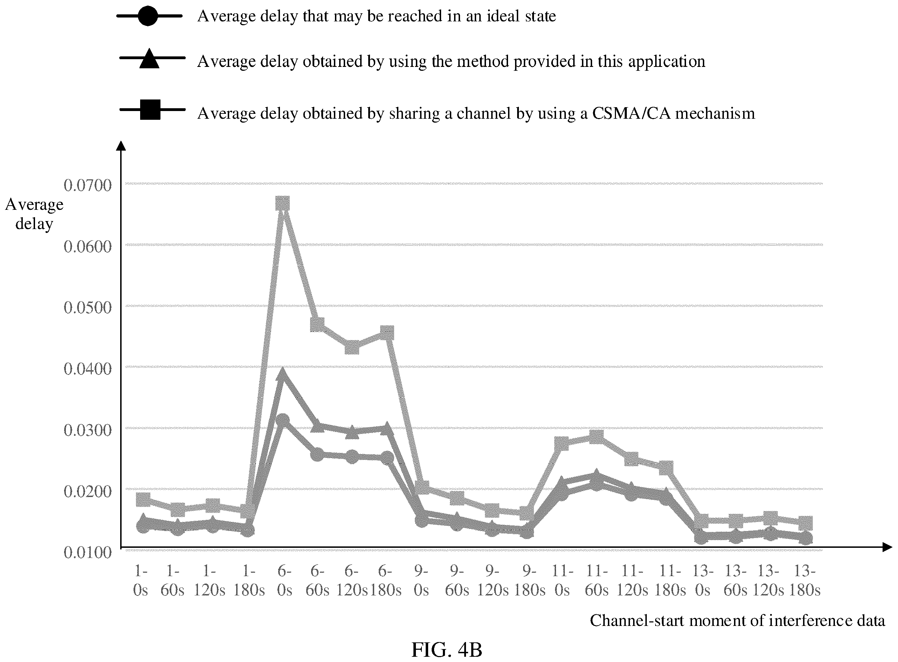

For example, FIG. 4B is another schematic effect diagram of a communication method according to an embodiment of this application. As shown in FIG. 4B, a horizontal coordinate represents a channel-a start moment of interference data. For example, a horizontal coordinate of 9-180s represents interference data at a start moment of 180s on a channel 9. A vertical coordinate represents an average delay. The average delay is obtained by collecting statistics on data that is on a channel represented by using a corresponding horizontal coordinate and that is within 60s starting from a start moment represented by using the horizontal coordinate. FIG. 4B shows an optimal value that may be reached by the average delay in an ideal state, an average delay obtained by the first device by sharing a channel by using a CSMA/CA mechanism, and an average delay obtained by the first device by using the communication method provided in this application. It may be learned that the average delay obtained by the first device by using the communication method provided in this application is clearly less than the average delay obtained by the first device by sharing a channel by using the CSMA/CA mechanism. It may be learned that for the first device, according to the communication method in this application, a data transmission delay can be reduced, and communication transmission quality can be improved.

In this embodiment of this application, the first device determines the first channel access manner based on the network status information. The first channel access manner is the CSMA/CA channel access manner or the intelligent channel access manner. The intelligent channel access manner is a manner of accessing a channel based on the channel access decision obtained by the neural network. The first device sends the data on the channel in the first channel access manner. It may be learned that the first device may select a channel access manner based on the network status information, and send the data in the selected channel access manner. The channel access manner may be the CSMA/CA channel access manner or the intelligent channel access manner. The intelligent channel access manner is a manner of accessing a channel based on the channel access decision obtained by the neural network. Therefore, a communication collision between the first device and another node in a network is avoided, to implement interference avoidance, improve communication quality of the node, and improve user experience.

In this application, optionally, a second device may send first information to the first device. The first information includes a parameter of the neural network and a structure of the neural network, or the first information includes a gradient of the neural network and a structure of the neural network, so that the first device determines the neural network based on the first information. Optionally, the embodiment shown in FIG. 2 further includes step S201a to step S201c. Step S201a to step S201c may be performed before step S201.

S201a: The second device determines the first information.

The first information includes the parameter of the neural network and the structure of the neural network, or the first information includes the gradient of the neural network and the structure of the neural network. Optionally, the parameter of the neural network includes a weight, a bias, and the like. The structure of the neural network includes a type of the neural network, a quantity of layers in the neural network, a quantity of neurons at each layer, and an activation function used at each layer in the neural network. For example, the type of the neural network includes a fully connected neural network, a convolutional neural network, or a recurrent neural network.

A possible implementation of determining, by the second device, the parameter of the neural network or the gradient of the neural network in step S201a is described below. Optionally, step S201a specifically includes step 1 and step 2.

Step 1: The second device obtains RSSIs of a plurality of first devices and historical data transmission results of the plurality of first devices, where the plurality of first devices are first devices associated with the second device.

For example, the first device is a STA, and the second device is an AP. The plurality of STAs may be understood as STAs managed by the AP, and the plurality of STAs may establish communication connections to the AP in a signal coverage area of the AP.

The historical data transmission results of the plurality of first devices include historical data transmission statuses of the plurality of first devices, for example, information indicating a historical data transmission success or failure.

Step 2: The second device trains the neural network based on the RSSIs of the plurality of first devices, the historical data transmission results of the plurality of first devices, and the structure of the neural network, to obtain the parameter of the neural network or the gradient of the neural network.

Specifically, the second device uses the RSSIs of the plurality of first devices and the historical data transmission results of the plurality of first devices as training data, and trains the neural network based on the structure of the neural network, to obtain the parameter of the neural network or the gradient of the neural network.

S201b: The second device sends a first frame to the first device. The first frame includes an information element, the information element includes the first information, and the first information includes the parameter of the neural network and the structure of the neural network, or the first information includes the gradient of the neural network and the structure of the neural network.

Optionally, the first frame is a beacon frame or a probe frame. This is not specifically limited in this application.

In some implementations, the information element further includes an element identifier, a length, element identifier extension, and the first information.

The element identifier or the element identifier extension indicates a function, that is, a neural network function, of the first frame. The length indicates a length of the first frame.

For example, as shown in FIG. 5, the information element includes the element identifier (element ID), the length (length), the element identifier extension (element ID extension), and the first information.

For a manner in which the first frame is a probe frame, optionally, before step S201b, the first device sends a probe request (probe request) to the second device.

It should be noted that for a first device that does not support the neural network function, the first device cannot identify the element identifier, that is, cannot identify the function (neural network function) of the first frame. Therefore, the first device may ignore the first frame.

S201c: The first device determines the neural network based on the first information.

Specifically, after the first device receives the first frame, the first device may parse the first frame, and read the first information from the first frame. The first device determines the neural network based on the first information.

It should be noted that optionally, the second device may regularly obtain RSSIs of a plurality of first devices and historical data transmission results of the plurality of first devices, and update the first information. After the first device receives updated first information, the first device may determine the neural network by using the updated first information. Therefore, the neural network used by the first device is adapted to a network environment. In this way, the first device can better perform data transmission, to avoid a communication collision between nodes, and improve communication performance.

With reference to FIG. 6 to FIG. 8, several possible implementations in which the first device determines the first channel access manner based on the network status information in step S201 in the embodiment shown in FIG. 2 are described below.

FIG. 6 is a schematic diagram of another embodiment of a communication method according to an embodiment of this application. With reference to FIG. 6, the communication method includes the following steps.

S601: A first device determines a quantity M of times that an energy detection value is greater than a first threshold in a plurality of times of signal energy detection performed by the first device in first preset duration and a quantity N of times that a carrier sense value is greater than a second threshold in a plurality of times of carrier sense performed by the first device in the first preset duration, where both M and N are integers greater than or equal to 1.

For example, the first preset duration may be 1s, the first threshold may be -82 dBm (decibel relative to one milliwatt), and the second threshold may be -62 dBm.

S602: The first device determines whether a ratio of M to N is greater than or equal to a third threshold. If the ratio of M to N is greater than or equal to the third threshold, step S603 is performed. If the ratio of M to N is less than the third threshold, step S604 is performed.

Optionally, the third threshold may be set based on an empirical value. For example, the third threshold is 0.7 or 0.8.

When the first device performs channel energy detection, the first device can detect signal energy of all systems in an environment. However, when the first device performs carrier sense, the first device can sense signal energy only of a system in which the first device is located. Therefore, if the ratio of M to N is greater than or equal to the third threshold, it indicates that there are a large quantity of homogeneous nodes in the environment, that is, most nodes access a channel in a CSMA/CA channel access manner, and the first device may determine that a first channel access manner is the CSMA/CA channel access manner. The homogeneous node is a node that accesses a channel in the CSMA/CA channel access manner. If the ratio of M to N is less than the third threshold, the first device may determine that there are a large quantity of heterogeneous nodes in the environment and interference is strong, and the first device may determine that a first channel access manner is an intelligent channel access manner. The heterogeneous node is a node that accesses a channel in a channel access manner other than a CSMA/CA channel access manner.

S603: The first device determines that the first channel access manner is the CSMA/CA channel access manner.

If the ratio of M to N is greater than or equal to the third threshold, the first device may send data in the CSMA/CA channel access manner. For example, the first device maps the data to a CSMA/CA queue, and sends the data on the channel by using a queue parameter of the CSMA/CA queue.

S604: The first device determines that the first channel access manner is the intelligent channel access manner.

If the ratio of M to N is less than the third threshold, the first device may send data in the intelligent channel access manner. For example, the first device maps the data to an intelligent channel access queue, and sends the data on the channel by using a queue parameter that is of the intelligent channel access queue and that is output by a neural network.

A specific solution in which the first device determines the first channel access manner based on a network status parameter is provided in the embodiment shown in FIG. 6. The first device may select a corresponding channel access manner based on a network interference degree (represented by using the energy detection value and the carrier sense value). For example, when the network interference degree is high, the first device may select the intelligent channel access manner, to facilitate interference avoidance, so as to avoid a communication collision between the first device and another node, and improve communication transmission performance. When the network interference degree is low, the first device may select the CSMA/CA channel access manner.

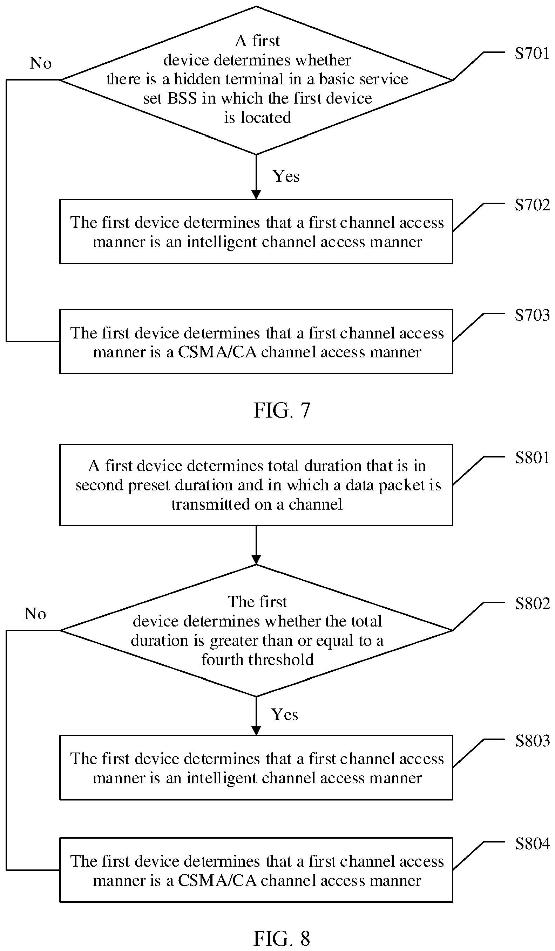

FIG. 7 is a schematic diagram of another embodiment of a communication method according to an embodiment of this application. With reference to FIG. 7, the communication method includes the following steps.

S701: A first device determines whether there is a hidden terminal in a BSS in which the first device is located. If there is a hidden terminal in the BSS in which the first device is located, step S702 is performed. If there is no hidden terminal in the BSS in which the first device is located, step S703 is performed.

For example, a STA 1 and a STA2 are located in a BSS in which an AP is located, the STA 1 communicates with the AP, and the STA2 communicates with the AP. The STA 1 can sense a signal of the AP, but cannot sense a signal of the STA 2. That is, the STA 1 is located in the BSS in which the AP is located, but is not located in a signal coverage area of the STA2. However, for the STA 1, the STA2 is a hidden terminal. In this case, the AP may determine that there is a hidden terminal in the BSS.

S702: The first device determines that a first channel access manner is an intelligent channel access manner.

If there is a hidden terminal in the BSS in which the first device is located, the first device selects the intelligent channel access manner.

S703: The first device determines that a first channel access manner is a CSMA/CA channel access manner.

If there is no hidden terminal in the BSS in which the first device is located, the first device selects the CSMA/CA channel access manner.

Another solution in which the first device determines the first channel access manner based on a network status parameter is provided in the embodiment shown in FIG. 7. The first device may select a corresponding channel access manner based on a network topology structure. For example, when there is no hidden terminal in the BSS in which the first device is located, the first device selects the CSMA/CA channel access manner, to avoid a communication collision between the first device and the hidden terminal.

FIG. 8 is a schematic diagram of another embodiment of a communication method according to an embodiment of this application. With reference to FIG. 8, the communication method includes the following steps.

S801: A first device determines total duration that is in second preset duration and in which a data packet is transmitted on a channel.

Optionally, the second preset duration may fall within a range from 5s to 20s. The second preset duration may be 5s, 10s, 12s, or the like.

S802: The first device determines whether the total duration is greater than or equal to a fourth threshold. If the total duration is greater than or equal to the fourth threshold, step S803 is performed. If the total duration is less than the fourth threshold, step S804 is performed.

Optionally, the fourth threshold may be set based on an empirical value. For example, the second preset duration is 5s, and the fourth threshold may be 2.5s.

Specifically, the first device may determine a busyness degree of the channel. When the channel is busy, the first device may send data in an intelligent channel access manner. Otherwise, the first device may send data in a CSMA/CA channel access manner. Specifically, the first device may determine the busyness degree of the channel by using the total duration that is in the second preset duration and in which a data packet is transmitted on the channel. For example, when the total duration is greater than the fourth threshold, it indicates that the channel is busy; and when the total duration is less than the fourth threshold, it indicates that the channel is idle.

S803: The first device determines that a first channel access manner is the intelligent channel access manner.

If the total duration is greater than or equal to the fourth threshold, the first device determines that the first channel access manner is the intelligent channel access manner.

S804: The first device determines that a first channel access manner is the CSMA/CA channel access manner.

If the total duration is less than the fourth threshold, the first device determines that the first channel access manner is the CSMA/CA channel access manner.

Another solution in which the first device determines the first channel access manner based on a network status parameter is provided in the embodiment shown in FIG. 8. The first device may select a corresponding channel access manner based on the busyness degree of the channel. For example, when the channel is busy, the first device selects the intelligent channel access manner, to avoid a communication collision with another node on the channel.

The communication method provided in embodiments of this application is described above. A communication apparatus provided in this application is described below.

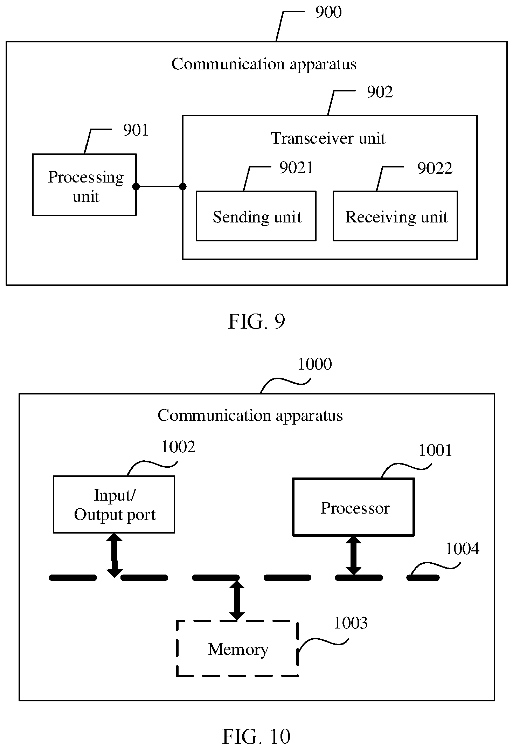

FIG. 9 is a schematic diagram of a structure of a communication apparatus according to an embodiment of this application. With reference to FIG. 9, the communication apparatus 900 includes a processing unit 901 and a transceiver unit 902.

Optionally, the transceiver unit 902 is configured to perform a receiving or sending process of the communication apparatus 900. Therefore, the transceiver unit 902 may also be represented as a sending unit 9021 configured to perform the sending process of the communication apparatus 900, and/or the transceiver unit 902 may also be represented as a receiving unit 9022 configured to perform the receiving process of the communication apparatus 900.

Optionally, the communication apparatus 900 is configured to perform an implementation process of the first device in the foregoing embodiments of this application.

The processing unit 901 is configured to determine a first channel access manner based on network status information. The first channel access manner is a CSMA/CA channel access manner or an intelligent channel access manner, and the intelligent channel access manner is a manner of accessing a channel based on a channel access decision obtained by a neural network.

The transceiver unit 902 is configured to send data on the channel in the first channel access manner.

In a possible implementation, the intelligent channel access manner is a manner of accessing a channel based on a channel access decision obtained by the neural network based on an environment status parameter.

In another possible implementation, the environment status parameter includes at least one of the following: an RSSI obtained by the communication apparatus 900, an energy detection value obtained by performing signal energy detection by the communication apparatus 900, and a carrier sense value obtained by performing carrier sense by the communication apparatus 900.

In another possible implementation, the CSMA/CA channel access manner includes any one of the following: a DCF channel access manner and an EDCA manner.

In another possible implementation, the processing unit 901 is specifically configured to:
determine a quantity M of times that an energy detection value is greater than a first threshold in a plurality of times of signal energy detection performed by the communication apparatus 900 in first preset duration and a quantity N of times that a carrier sense value is greater than a second threshold in a plurality of times of carrier sense performed by the communication apparatus 900 in the first preset duration, where both M and N are integers greater than or equal to 1; and
if a ratio of M to N is greater than or equal to a third threshold, determine that the first channel access manner is the CSMA/CA channel access manner; or
if a ratio of M to N is less than a third threshold, determine that the first channel access manner is the intelligent channel access manner.

In another possible implementation, the processing unit 901 is specifically configured to:
if there is a hidden terminal in a BSS in which the communication apparatus 900 is located, determine that the first channel access manner is the intelligent channel access manner; or
if there is no hidden terminal in a BSS in which the communication apparatus 900 is located, determine that the first channel access manner is the CSMA/CA channel access manner.

In another possible implementation, the processing unit 901 is specifically configured to:
determine total duration that is in second preset duration and in which a data packet is transmitted on the channel; and
if the total duration is greater than or equal to a fourth threshold, determine that the first channel access manner is the intelligent channel access manner; or
if the total duration is less than a fourth threshold, determine that the first channel access manner is the CSMA/CA channel access manner.

In another possible implementation, the first channel access manner is the intelligent channel access manner, and the transceiver unit 902 is specifically configured to:
map the data to an intelligent channel access queue, where the intelligent channel access queue carries data that accesses a channel in the intelligent channel access manner; and
send the data on the channel by using a queue parameter that is of the intelligent channel access queue and that is output by the neural network.

In another possible implementation, the queue parameter of the intelligent channel access queue includes a sending probability of the data or a first indication, and the first indication indicates whether to send the data.

In another possible implementation, the processing unit 901 is further configured to:
obtain an RSSI in the first preset duration; and
obtain the queue parameter of the intelligent channel access queue based on the RSSI in the first preset duration and the neural network.

In another possible implementation, the queue parameter of the intelligent channel access queue includes a sending probability of the data, and the transceiver unit 902 is specifically configured to:
generate a random number corresponding to the data;
determine whether the random number is greater than the sending probability; and
if the random number is greater than the sending probability, not send the data on the channel; or
if the random number is not greater than the sending probability, send the data on the channel.

In another possible implementation, the queue parameter of the intelligent channel access queue includes a first indication, and the transceiver unit is specifically configured to:
if the first indication indicates to send the data, send the data on the channel; or
if the first indication indicates not to send the data, not send the data on the channel.

In another possible implementation, the transceiver unit 902 is further configured to:
receive a first frame from a second device, where the first frame includes an information element, the information element includes first information, and the first information includes a parameter of the neural network and a structure of the neural network, or the first information includes a gradient of the neural network and a structure of the neural network; and
the processing unit 901 is specifically configured to:
   determine the neural network based on the first information.

In another possible implementation, the first frame is a beacon frame or a probe frame.

Optionally, the communication apparatus 900 is configured to perform an implementation process of the second device in the foregoing embodiments of this application.

The processing unit 901 is configured to determine first information. The first information includes a parameter of a neural network and a structure of the neural network, or the first information includes a gradient of a neural network and a structure of the neural network, and the first information is used by a first device to determine the neural network.

The transceiver unit 902 is configured to send a first frame to the first device. The first frame includes an information element, and the information element includes the first information.

In a possible implementation, the processing unit 901 is specifically configured to:
obtain RSSIs of a plurality of first devices and historical data transmission results of the plurality of first devices, where the plurality of first devices are first devices associated with the communication apparatus 900; and
train the neural network based on the RSSIs of the plurality of first devices, the historical data transmission results of the plurality of first devices, and the structure of the neural network, to obtain the first information.

In another possible implementation, the first frame is a beacon frame or a probe frame.

It should be noted that the communication apparatus 900 may be further configured to: perform other embodiments performed by the first device in FIG. 2, FIG. 6, FIG. 7, and FIG. 8, and achieve corresponding beneficial effects. For details, refer to the descriptions in the foregoing embodiments. Details are not described herein.

It should be noted that the communication apparatus 900 may be further configured to: perform another embodiment performed by the second device in FIG. 2, and achieve corresponding beneficial effects. For details, refer to the descriptions in the foregoing embodiments. Details are not described herein.

The first device and the second device in embodiments of this application are described above. Possible product forms of the first device and the second device are described below. It should be understood that the following descriptions are merely examples, and product forms of the first device and the second device in embodiments of this application are not limited thereto.

In a possible product form, the first device and the second device in embodiments of this application may be implemented by using general bus architectures.

For ease of description, FIG. 10 is a schematic diagram of a structure of a communication apparatus 1000 according to an embodiment of this application. The communication apparatus 1000 may be a first device, a second device, or a chip thereof. FIG. 10 shows only main components of the communication apparatus 1000. The communication apparatus 1000 includes at least a processor 1001 and an input/output port 1002.

Optionally, the input/output port 1002 may alternatively be referred to as a communication port, a communication interface, or the like.

Optionally, the communication apparatus 1000 may further include a memory 1003.

Optionally, a bus 1004 may be further added to the apparatus 1000, and the bus 1004 is configured to establish a connection between the input/output port 1002 and/or the memory 1003 and the processor 1001.

The processor 1001 is mainly configured to: process a communication protocol and communication data, control the entire communication apparatus, execute a software program, and process data of the software program. The memory 1003 is mainly configured to store the software program and the data. The input/output port 1002 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. For example, the input/output port 1002 may be a touchscreen, a display screen, or a keyboard, and is mainly configured to: receive data entered by a user, and output data to the user.

After the communication apparatus 1000 is powered on, the processor 1001 may read the software program in the memory 1003, interpret and execute instructions of the software program, and process the data of the software program. When data needs to be sent wirelessly, the processor 1001 performs baseband processing on the to-be-sent data, and then outputs a baseband signal to a radio frequency circuit. The radio frequency circuit performs radio frequency processing on the baseband signal, and then sends a radio frequency signal to the outside in a form of electromagnetic wave through the antenna. When data is to be sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

Optionally, the memory 1003 may be located in the processor 1001.

In any one of the foregoing designs, the processor 1001 may include a communication interface configured to implement receiving and sending functions. For example, the communication interface may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, to enable the communication apparatus 1000 to perform the method described in any one of the foregoing embodiments. The computer program may be embedded in the processor 1001. In this case, the processor 1001 may be implemented by hardware.

In an implementation, the communication apparatus 1000 may include a circuit, and the circuit may implement a sending, receiving, or communication function in any one of the foregoing embodiments. The processor and the communication interface described in this application may be implemented on an integrated circuit (integrated circuit, IC), an analog IC, a radio frequency integrated circuit (radio frequency integrated circuit, RFIC), a mixed signal IC, an application-specific integrated circuit (application-specific integrated circuit, ASIC), a printed circuit board (printed circuit board, PCB), an electronic device, or the like. The processor and the communication interface may be manufactured by using various IC technologies, for example, a complementary metal oxide semiconductor (complementary metal oxide semiconductor, CMOS), an N-channel metal oxide semiconductor (N-channel metal oxide semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 10. The communication apparatus may be an independent device or may be a part of a large device. For example, the communication apparatus may be:
(1) an independent integrated circuit IC, a chip, or a chip system or subsystem;
(2) a set including one or more ICs, where optionally, the set of ICs may further include a storage component configured to store data and a computer program;
(3) an ASIC, for example, a modem (Modem);
(4) a module that can be built into another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

In a possible product form, the first device and the second device in embodiments of this application may be implemented by general-purpose processors.

It should be understood that the communication apparatuses in the foregoing product forms have any function of the first device or the second device in any one of the foregoing embodiments. Details are not described herein.

An embodiment of this application further provides a computer-readable storage medium. The computer-readable storage medium stores computer program code. When the foregoing processor executes the computer program code, an electronic device performs the method in any one of the foregoing embodiments.

An embodiment of this application further provides a computer program product. When the computer program product is run on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through a receiver circuit, to enable the apparatus to perform the method in any one of the foregoing embodiments.

An embodiment of this application further provides a wireless communication system, including a first device and a second device. The first device and the second device may perform the method in any one of the foregoing embodiments.

The method or algorithm steps described with reference to the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC.

A person skilled in the art should be aware that in the foregoing one or more examples, functions described in this application may be implemented by hardware, software, firmware, or any combination thereof. When being implemented by software, these functions may be stored in a computer-readable medium or transmitted as one or more instructions or code on a computer-readable medium. The computer-readable medium includes a computer-readable storage medium and a communication medium. The communication medium includes any medium that enables a computer program to be transmitted from a location to another location. The storage medium may be any available medium accessible to a general-purpose or dedicated computer.

In this application, unless otherwise specified, for same or similar parts in embodiments, refer to each other. In embodiments of this application and the implementations/implementation methods in embodiments, unless otherwise specified or a logical collision occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship of the technical features. The following implementations of this application are not intended to limit the protection scope of this application.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A communication method, wherein the method comprises:
determining, by a first device, a first channel access manner based on network status information, wherein the first channel access manner is a carrier sense multiple access with collision avoidance CSMA/CA channel access manner or an intelligent channel access manner, and the intelligent channel access manner is a manner of accessing a channel based on a channel access decision obtained by a neural network; and
sending, by the first device, data on the channel in the first channel access manner.

2. The method according to claim 1, wherein the intelligent channel access manner is a manner of accessing a channel based on a channel access decision obtained by the neural network based on an environment status parameter.

3. The method according to claim 2, wherein the environment status parameter comprises at least one of the following: a received signal strength indicator RSSI obtained by the first device, an energy detection ED value obtained by performing signal energy detection by the first device, and a carrier sense CS value obtained by performing carrier sense by the first device.

4. The method according to any one of claims 1 to 3, wherein the determining, by a first device, a first channel access manner based on network status information comprises:
determining, by the first device, a quantity M of times that an energy detection ED value is greater than a first threshold in a plurality of times of signal energy detection ED performed by the first device in first preset duration and a quantity N of times that a CS value is greater than a second threshold in a plurality of times of carrier sense CS performed by the first device in the first preset duration, wherein both M and N are integers greater than or equal to 1; and
if a ratio of M to N is greater than or equal to a third threshold, determining, by the first device, that the first channel access manner is the CSMA/CA channel access manner; or
if a ratio of M to N is less than the third threshold, determining, by the first device, that the first channel access manner is the intelligent channel access manner.

5. The method according to any one of claims 1 to 3, wherein the determining, by a first device, a first channel access manner based on network status information comprises:
if there is a hidden terminal in a basic service set BSS in which the first device is located, determining, by the first device, that the first channel access manner is the intelligent channel access manner; or
if there is no hidden terminal in a BSS in which the first device is located, determining, by the first device, that the first channel access manner is the CSMA/CA channel access manner.

6. The method according to any one of claims 1 to 3, wherein the determining, by a first device, a first channel access manner based on network status information comprises:
determining, by the first device, total duration that is in second preset duration and in which a data packet is transmitted on the channel; and
if the total duration is greater than or equal to a fourth threshold, determining, by the first device, that the first channel access manner is the intelligent channel access manner; or
if the total duration is less than a fourth threshold, determining, by the first device, that the first channel access manner is the CSMA/CA channel access manner.

7. The method according to any one of claims 1 to 6, wherein the first channel access manner is the intelligent channel access manner, and the sending, by the first device, data on the channel in the first channel access manner comprises:
mapping, by the first device, the data to an intelligent channel access queue, wherein the intelligent channel access queue carries data that accesses a channel in the intelligent channel access manner; and
sending, by the first device, the data on the channel by using a queue parameter that is of the intelligent channel access queue and that is output by the neural network.

8. The method according to claim 7, wherein the queue parameter of the intelligent channel access queue comprises a sending probability of the data or a first indication, and the first indication indicates whether to send the data.

9. The method according to any one of claims 1 to 8, wherein the method further comprises:
receiving, by the first device, a first frame from a second device, wherein the first frame comprises an information element, the information element comprises first information, and the first information comprises a parameter of the neural network and a structure of the neural network, or the first information comprises a gradient of the neural network and a structure of the neural network; and
determining, by the first device, the neural network based on the first information.

10. A communication method, wherein the method comprises:
determining, by a second device, first information, wherein the first information comprises a parameter of a neural network and a structure of the neural network, or the first information comprises a gradient of the neural network and a structure of the neural network, and the first information is used by a first device to determine the neural network; and
sending, by the second device, a first frame to the first device, wherein the first frame comprises an information element, and the information element comprises the first information.

11. A communication apparatus, wherein the communication apparatus comprises a transceiver unit configured to perform a receiving/sending operation in the method according to any one of claims 1 to 9 and a processing unit configured to perform a processing operation in the method according to any one of claims 1 to 9.

12. A communication apparatus, wherein the communication apparatus comprises a transceiver unit configured to perform a receiving/sending operation in the method according to claim 10 and a processing unit configured to perform a processing operation in the method according to claim 10.

13. A communication apparatus, wherein the communication apparatus comprises:
a memory, configured to store computer instructions; and
a processor, configured to execute a computer program or the computer instructions stored in the memory, to enable the communication apparatus to perform the method according to any one of claims 1 to 9, or to enable the communication apparatus to perform the method according to claim 10.

14. A communication apparatus, wherein the communication apparatus comprises a processor, and the processor is configured to execute a computer program or computer instructions in the memory, to perform the method according to any one of claims 1 to 9, or to perform the method according to claim 10.

15. A communication apparatus, wherein the communication apparatus comprises a processor, and the processor is configured to perform the method according to any one of claims 1 to 9, or the processor is configured to perform the method according to claim 10.

16. A computer-readable storage medium, wherein the computer-readable storage medium stores a computer program, and when the computer program is executed by a communication apparatus, the communication apparatus is enabled to perform the method according to any one of claims 1 to 9, or the communication apparatus is enabled to perform the method according to claim 10.

17. A computer program product, wherein when the computer program product is run, the method according to any one of claims 1 to 9 is performed, or the method according to claim 10 is performed.
